# EUROPÄISCHE PATENTSCHRIFT

(11) **EP 2 161 437 B1**
(45) Veröffentlichungstag und Bekanntmachung des Hinweises auf die Patenterteilung: **18.06.2014**
(21) Anmeldenummer: 09168697.2
(22) Anmeldetag: 26.08.2009
(51) Int. Cl.: F02K 1/76

(54) **Vorrichtung zum Öffnen und Schließen einer Schubumkehrertür eines Strahltriebwerks**
Device for opening and closing a thrust reverser door of a turbojet engine
Dispositif d'ouverture et de fermeture d'une porte d'inverseur de poussée d'un moteur à réaction

(30) Priorität: 05.09.2008 DE 102008045851
(43) Veröffentlichungstag der Anmeldung: 10.03.2010
(73) Patentinhaber: Rolls-Royce Deutschland Ltd & Co KG, 15827 Blankenfelde-Mahlow (DE)
(72) Erfinder: Lenk, Olaf, 12527 Berlin (DE)
(74) Vertreter: Gross, Felix

(56) Entgegenhaltungen:
- EP-A1- 0 534 833
- GB-A- 2 426 283
- US-A- 6 021 636
- US-A1- 2002 145 078

## Beschreibung

Die Erfindung betrifft eine Vorrichtung zum Öffnen und Schließen einer Schubumkehrertür eines Strahltriebwerks sowie ein Verfahren zum Öffnen und Schließen einer Schubumkehrertür eines Strahltriebwerks mittels einer Vorrichtung.

Triebwerke mit Installation am Flugzeugrumpf werden häufig mit Schubumkehrern ausgerüstet, welche über ausklappbare Schubumkehrertüren den Abgasstrahl derart umkehren, dass das Flugzeug abgebremst wird. Die Betätigung der Schubumkehrertüren erfolgt zumeist durch ein hydraulisches Aktuatorsystem.

Schubumkehrer, die zusammen mit dem Strahltriebwerk am Heck eines Flugzeuges angebracht werden, sind zumeist so konstruiert, dass der Umkehrschub durch Ausklappen der beiden Schubumkehrertüren realisiert wird. Diese Schubumkehrertüren versperren den Abgasstrahl nach hinten und öffnen nicht dargestellte Luftauslässe an der Ober- und Unterseite des Schubumkehrers. Durch diese Öffnungen kann der Abgasstrahl entweichen.

Da die Schubumkehrertüren im Flugbetrieb geschlossen sind, müssen diese aus Sicherheitsgründen über Verschlussmechanismen gesichert werden. Jede Schubumkehrertür weist zwei Verschlussmechanismen auf, die einander gegenüberliegend an den in Umfangsrichtung zeigenden Seiten der Schubumkehrertür angebracht sind. Zum Öffnen der Schubumkehrertüren muss jeder Verschlussmechanismus zunächst entlastet und anschließend freigegeben werden. Dabei müssen die Schubumkehrertüren gegen den Innendruck im Schubumkehrer bewegt werden ("overstow"), was einen entsprechenden Kraftaufwand voraussetzt. In derzeitigen Schubumkehrern wird dazu die Kraftwirkung der Aktuatoren des hydraulischen Aktuatorsystems umgekehrt.

Die US 6,487,845 B1 offenbart ein Strahltriebwerk mit Schubumkehrertüren, die über Aktuatoren geöffnet und geschlossen werden. Zum Öffnen und Schließen der Verschlussmechanismen an den Schubumkehrertüren ziehen die Aktuatoren die Schubumkehrertüren soweit in Schließrichtung bis die Verschlussmechanismen entlastet werden und freigegeben werden können.

Aus der US 2002/0145078 A1 ist eine Schubumkehrertür gemäß dem Oberbegriff des Patentanspruchs 1 bekannt.

Mit der Erhöhung verschiedener Anforderungen, insbesondere hinsichtlich der Reaktionszeit des Schubumkehrers, erfolgt eine Entlastung der Verschlussmechanismen bei immer höheren Innendrücken. Die dazu notwendigen Aktuatorkräfte erfordern entsprechend grosse und schwere Aktuatoren. Des Weiteren müssen die hohen Aktuatorkräfte von der Struktur des Schubumkehrers aufgenommen werden, was zu verstärkter und damit schwerer Bauweise führt.

Der Erfindung liegt daher die Aufgabe zu Grunde, den Verschlussmechanismus auch gegen höhere Innendrücke im Schubumkehrer zu öffnen, ohne die Leistung des Aktuators zu erhöhen bzw. ohne den Aktuator in Anspruch zu nehmen.

Diese Aufgabe wird erfindungsgemäß mit einer Vorrichtung zum Öffnen und Schließen einer Schubumkehrertür eines Strahltriebwerks nach Anspruch 1 gelöst. Weiterhin wird die Aufgabe mit einem Verfahren zum Öffnen und Schließen einer Schubumkehrertür eines Strahltriebwerks mittels einer Vorrichtung nach Anspruch 7 gelöst. Vorteilhafte Ausgestaltungen der Erfindung sind in den Unteransprüchen enthalten.

Erfindungsgemäß besteht die Lösung der Aufgabe in einer Vorrichtung zum Öffnen und Schließen einer Schubumkehrertür eines Strahltriebwerks, wobei die Vorrichtung mindestens einen Aktuator und mindestens einen Verschlussmechanismus aufweist, der mindestens ein an der Schubumkehrertür angebrachtes erstes Verschlusselement und mindestens ein an der Schubumkehrerstruktur angebrachtes zweites Verschlusselement umfasst, und wobei das Strahltriebwerk eine Längsachse aufweist. Die Vorrichtung umfasst zusätzlich zu dem Aktuator mindestens einen Entlastungsmechanismus, der mit dem Verschlussmechanismus gekoppelt ist.

Der Entlastungsmechanismus ermöglicht eine Krafteinleitung am Verschlussmechanismus, die den Aktuator unterstützt oder ersetzt. Die Kopplung des Entlastungsmechanismus mit dem Verschlussmechanismus bewirkt eine direkte Entlastung des Verschlusses beim Öffnen der Schubumkehrertüren. Dieser direkte Lastpfad entlastet den Rest der Triebwerksstruktur (Aktuatoren und deren Strukturanbindung), welche dadurch gewichtsgünstig ausgelegt werden kann. Zusätzlich besteht die Möglichkeit, die Reaktionszeit des Schubumkehrers zu verringern.

Der Entlastungsmechanismus umfasst mindestens ein Entlastungselement, das an dem ersten Verschlusselement angebracht ist, und mindestens einen zu dem Entlastungselement gehörigen Kraftarm umfasst.

Das Entlastungselement am ersten Verschlusselement ermöglicht, dass die Krafteinleitung direkt am ersten Verschlusselement stattfindet und nicht wie beim Aktuator indirekt über das Ziehen an den Türen. Der Kraftarm dient zur Krafteinleitung in das Entlastungselement und damit zum Bewegen des ersten Verschlusselements.

Insbesondere ist der Kraftarm im Wesentlichen parallel zu der Längsachse des Strahltriebwerks angeordnet. Dadurch ist eine Platz sparende Unterbringung des Kraftarms an der Triebwerksstruktur gegeben, wobei der Kraftarm auch außerhalb des Bewegungsbereichs der Schubumkehrertür liegt.

Außerdem kann das Entlastungselement mindestens eine schräge und/oder gekrümmte Fläche, die zur Schubumkehrertür zeigt, und der Kraftarm mindestens eine Rolle aufweisen, die auf der schrägen und/oder gekrümmten Fläche des Entlastungselements abrollbar ist.

Bei dieser Anordnung kann der Kraftarm bei einer Bewegung entlang des Entlastungselements mit der Rolle reibungsarm auf der schrägen und/oder gekrümmten Fläche abrollen.

Vorzugsweise ist das zweite Verschlusselement an einem Schwenkarm befestigt. Dies ermöglicht ein Freigeben des Verschlussmechanismus.

In einer besonderen Ausgestaltung sind die zweiten Verschlusselemente von zwei benachbarten Schubumkehrertüren an einem gemeinsamen Schwenkarm befestigt sind. Dadurch wird die Anzahl der Bauteile am Verschlussmechanismus reduziert.

Insbesondere kann das erste Verschlusselement im Wesentlichen L-förmig sein und an dem in das zweite Verschlusselement eingreifenden Teil ein Sicherungselement für das zweite Verschlusselement aufweisen.

Die L-förmige Ausbildung des ersten Verschlusselements ermöglicht ein gutes Freigeben des Verschlusses. Das Sicherungselement verhindert, dass der Verschlussmechanismus unbeabsichtigt freigegeben wird.

In einer besonderen Ausgestaltung ist das erste Verschlusselement ein Haken und das zweite Verschlusselement eine Öse oder umgekehrt. Haken und Öse bilden einen einfach aufgebauten Verschlussmechanismus, der sich sicher Freigeben und Sichern lässt.

Weiterhin besteht die Lösung der Aufgabe in einem Verfahren zum Öffnen und Schließen einer Schubumkehrertür eines Strahltriebwerks mittels einer Vorrichtung, wobei die Schubumkehrertür zu Beginn des Öffnungsvorgangs in Schließrichtung gezogen wird und dabei der zugehörige Verschlussmechanismus entlastet und freigegeben wird. Es wird mindestens eine Kraft an dem Verschlussmechanismus eingeleitet, die allein oder zusammen mit dem Aktuator den Verschlussmechanismus entlastet, und der Verschlussmechanismus wird nach dem Entlasten und Freigeben von der Kraft befreit.

Die zusätzliche Kraft unterstützt den Aktuator beim Ziehen der Schubumkehrertür gegen den Innendruck im Strahltriebwerk und damit beim Entlasten des Verschlussmechanismus. Das Entfernen der Kraft nach dem Entlasten und Freigeben des Verschlussmechanismus ermöglicht ein anschließendes Öffnen der Schubumkehrertüren. Durch die zusätzliche Kraft können Aktuatoren und Strukturanbindungen mit relativ geringem Gewicht verwendet werden. Außerdem wird die Reaktionszeit des Schubumkehrers durch schnelleres Öffnen der Schubumkehrtüren verringert.

Die Kraft wird am Entlastungselement des ersten Verschlusselements eingeleitet. Die Krafteinleitung direkt am Verschlussmechanismus bewirkt einen kurzen Kraftleitungsweg und geringe Verluste.

Ferner wirkt die Kraft im Wesentlichen parallel zur Längsachse des Strahltriebwerks und bewegt das erste Verschlusselement in Schließrichtung der Schubumkehrertür.

In Richtung parallel zur Längsachse des Strahltriebwerks kann die Kraft gut durch entsprechende Mittel an der Triebwerksstruktur erzeugt werden. Das Bewegen des ersten Verschlusselements in Schließrichtung der Schubumkehrertür ermöglicht eine Freigabe des Verschlussmechanismus, insbesondere wenn er aus einem Haken und einer Öse besteht.

In einer zweckmäßigen Ausgestaltung wird die Kraft mittels des Kraftarms erzeugt, der mittels der Rolle an der schrägen und/oder gekrümmten Fläche des Entlastungselements abrollt.

Auf diese Weise wird die Kraft des Kraftarms auf einfache und verlustarme Weise auf das Entlastungselement und damit auf das erste Verschlusselement übertragen.

Im Folgenden werden der Stand der Technik und ein Ausführungsbeispiel der Erfindung anhand von Figuren näher erläutert. Es zeigen:
- Fig. 1a: eine Seitenansicht eines Schubumkehrers eines Strahltriebwerks mit geschlossenen Schubumkehrertüren,
- Fig. 1b: eine perspektivische Ansicht des Schubumkehrers mit geschlossenen
- Fig. 1c: Schubumkehrertüren, eine Seitenansicht des Schubumkehrers mit geöffneten Schubumkehrertüren,
- Fig. 1d: eine perspektivische Ansicht des Schubumkehrers mit geöffneten Schubumkehrtüren,
- Fig. 2a: eine perspektivische Ansicht des Schubumkehrers mit geschlossenen Schubumkehrertüren mit einem Verschlussmechanismus nach dem Stand der Technik,
- Fig. 2b: eine vergrößerte perspektivische Ansicht des Verschlussmechanismus nach dem Stand der Technik,
- Fig. 3a-d: eine Darstellung der Schritte zum Öffnen des Verschlussmechanismus nach dem Stand der Technik und
- Fig. 4a-d: eine Darstellung der Schritte zum Öffnen des erfindungsgemäßen Verschlussmechanismus mit Entlastungsmechanismus.

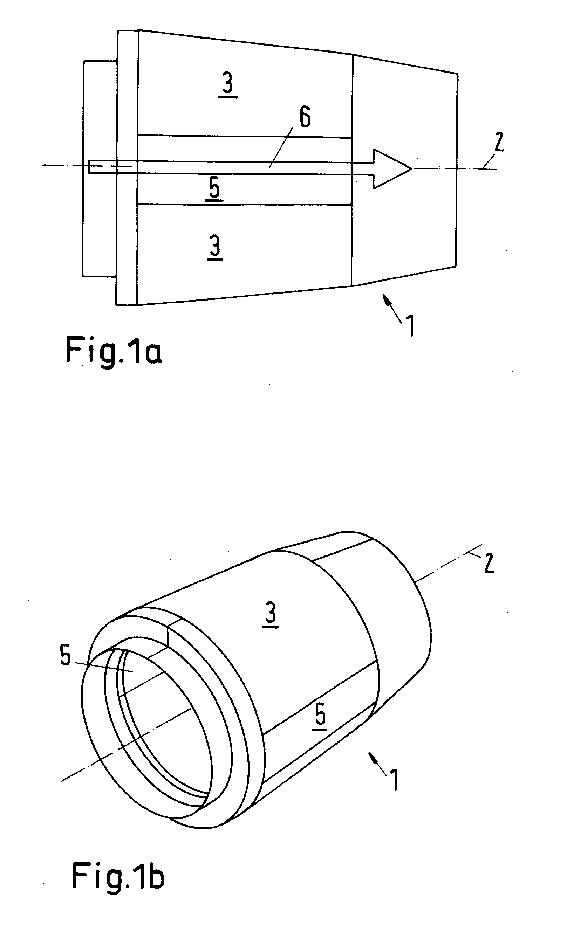

Die Fig. 1a-d zeigen schematische Ansichten eines Schubumkehrers 1 eines ansonsten nicht dargestellten Strahltriebwerks mit einer Längsachse 2. Der Schubumkehrer 1 umfasst zwei Schubumkehrertüren 3 und eine Schubumkehrerstruktur 5.

Die Schubumkehrertüren 3 sind einander gegenüber liegend und symmetrisch zur Längsachse 2 des Triebwerks angeordnet. Die Schubumkehrerstruktur 5 befindet sich in Umfangsrichtung zwischen den beiden Schubumkehrertüren 3 auf gegenüber liegenden Seiten des Strahltriebwerks.

Die Fig. 1a und 1b zeigen den Schubumkehrer 1 mit geschlossenen Schubumkehrertüren 3. Geschlossene Schubumkehrertüren 3 sind bei allen Betriebszuständen, in denen kein Bremsen des Triebwerks stattfinden darf, wie zum Beispiel beim Start- und Flugbetrieb, erforderlich. Dabei wird der Abgasstrahl 6 im Wesentlichen geradlinig durch den Schubumkehrer 1 geführt.

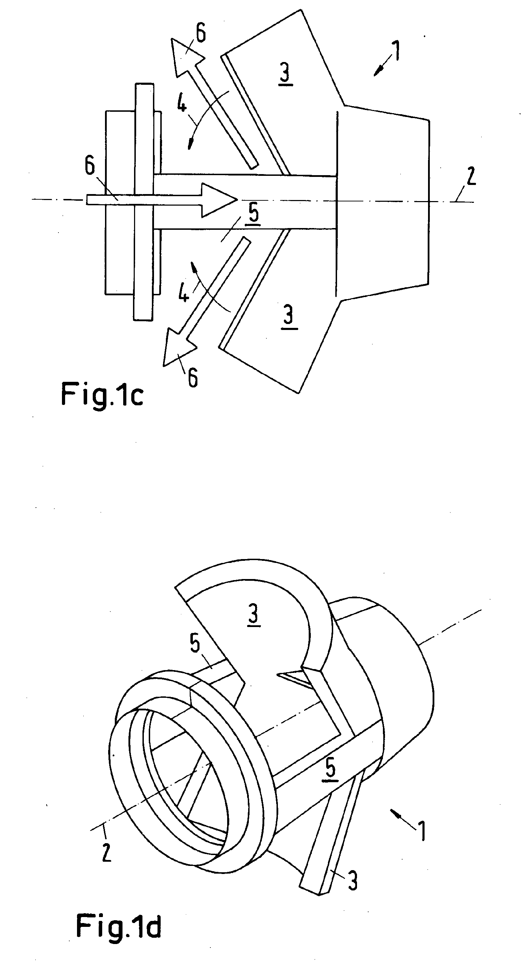

Die Fig. 1c und 1d zeigen den Schubumkehrer 1 mit geöffneten Schubumkehrertüren 3. Die Schubumkehrertüren 3 werden nur dann geöffnet, wenn das Flugzeug abgebremst werden soll. Dann wird der geradlinig in den Schubumkehrer 1 eintretende Abgasstrahl 6 entlang den geöffneten Schubumkehrertüren 3 abgelenkt und ins Freie geleitet (Umkehrschub).

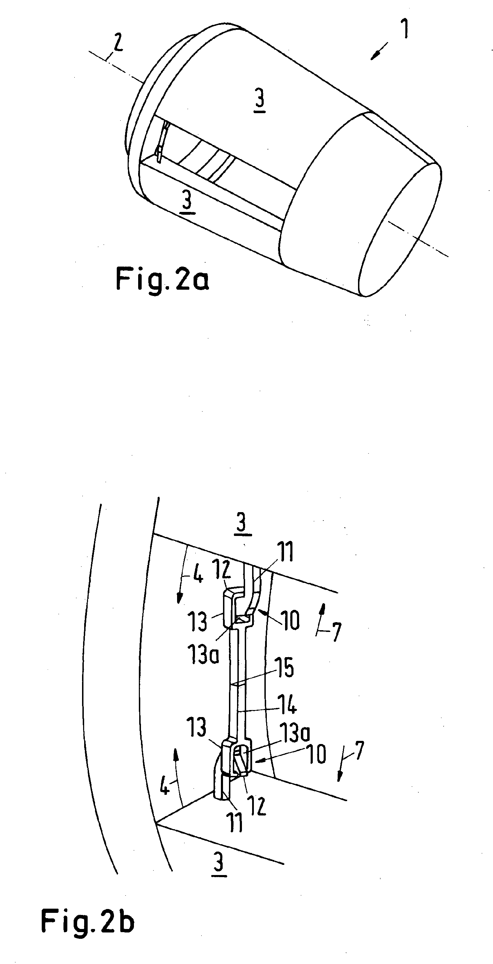

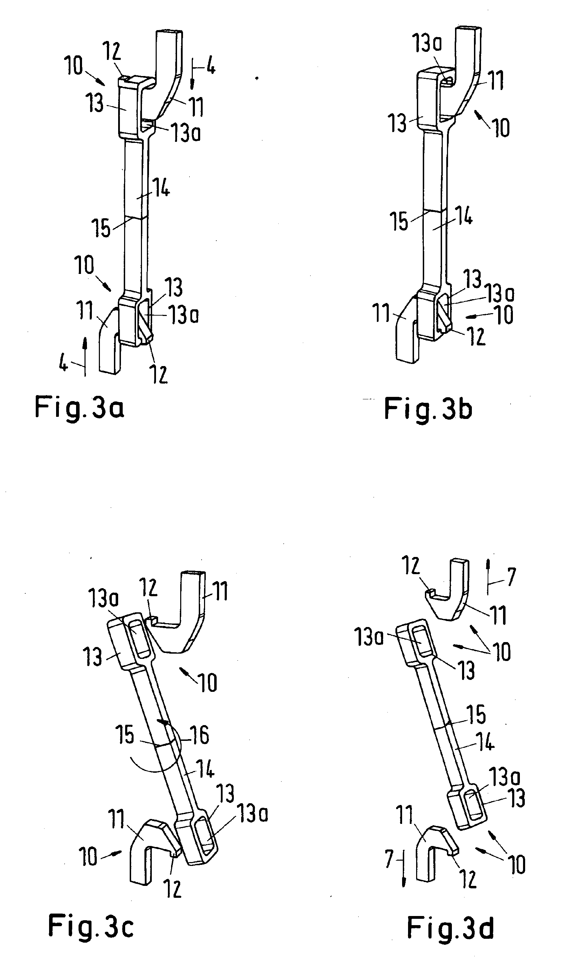

Die Fig. 2a, 2b und 3a-d zeigen zwei geschlossene Verschlussmechanismen 10 nach dem Stand der Technik für zwei geschlossene Schubumkehrertüren 3.

Die beiden benachbarten Verschlussmechanismen 10 sind einander gegenüber, aber mit entgegen gesetzter Ausrichtung angeordnet. Jeder Verschlussmechanismus 10 umfasst ein als Haken 11 ausgeführtes erstes Verschlusselement und ein als Öse 13 ausgeführtes zweites Verschlusselement. Die beiden Verschlussmechanismen 10 weisen einen gemeinsamen Schwenkarm 14 auf.

Auf beiden in Umfangsrichtung zeigenden Seiten jeder Schubumkehrertür 3 ist jeweils ein Verschlussmechanismus 10 angebracht. Der Haken 11 des Verschlussmechanismus 10 ist im Wesentlichen L-förmig ausgebildet und weist ein Sicherungselement 12 auf. An den Enden des Schwenkarms 14 ist jeweils eine Öse 13 mit einer Öffnung 13a angebracht. Der Schwenkarm 14 weist ein Gelenk 15 auf, das den Schwenkarm 14 in zwei symmetrische Abschnitte gliedert. Der Schwenkarm 14 ist über das Gelenk 15 an der Schubumkehrerstruktur 5 (vgl. 1a-d) befestigt.

Der Haken 11 greift bei geschlossener Schubumkehrertür 3 in die Öse 13 ein. Dabei verhindert das Sicherungselement 12 ein unbeabsichtigtes Freigeben des Verschlussmechanismus 10. Die Öffnungsrichtung 7 der Schubumkehrertüren 3 zeigt von den Verschlussmechanismen 10 weg nach außen. Die Schließrichtung 4 zeigt in die entgegen gesetzte Richtung, also zu den Verschlussmechanismen 10 hin.

Im Flug müssen die Schubumkehrertüren 3 verschlossen sein, um keine instabilen Flugzustände zu erzeugen. Da dies für das Flugzeug sicherheitsrelevant ist, werden die Verschlussmechanismen 10 eingesetzt.

In den Fig. 3a-d sind die drei Schritte des Entlastens und Freigebens des Verschlussmechanismus 10 und des Öffnens der Schubumkehrertüren 3 nach dem Stand der Technik dargestellt.

In den Fig. 3a und 3b ist der erste der drei Schritte dargestellt, nämlich der Vorgang der Entlastung zweier Verschlussmechanismen 10, die über den Schwenkarm 14 gekoppelt sind. Nicht dargestellte Aktuatoren ziehen die Schubumkehrertüren 3 und damit die Haken 11 in Schließrichtung 4 (Fig. 3a). Sobald sich die Sicherungselemente 12 der Haken 11 im Bereich der Öffnungen 13a der Ösen 13 befinden, wird die Bewegung der Schubumkehrertüren 3 gestoppt (Fig. 3b).

In Figur 3c ist der zweite Schritt, nämlich die Freigabe der beiden Verschlussmechanismen 10 dargestellt. Der Schwenkarm 14 wird in Schwenkrichtung 16 gedreht bis die Ösen 13 die Haken 11 freigeben.

In Figur 3d ist der dritte Schritt, nämlich die Öffnung der Schubumkehrertüren 3 dargestellt. Die nicht dargestellten Aktuatoren bewegen die Schubumkehrertüren 3 in Öffnungsrichtung 7 bis der gewünschte Umkehrschub erzeugt wird. Der Umkehrschub ist erforderlich, um das Flugzeug abzubremsen.

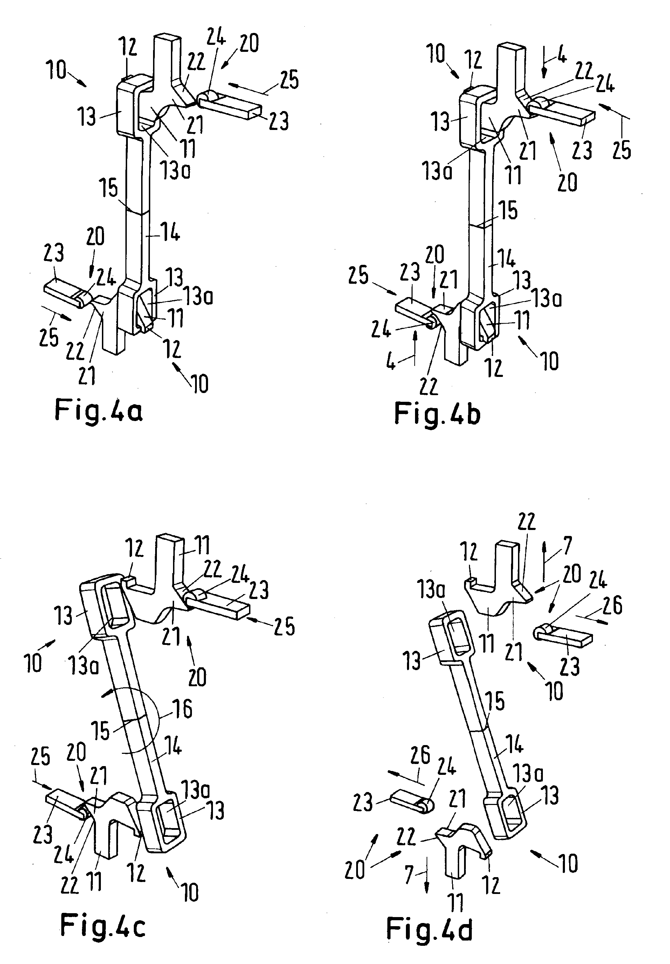

In den Fig. 4a-d sind die erfindungsgemäßen Verschlussmechanismen 10 dargestellt, die im Gegensatz zu den Verschlussmechanismen gemäß Fig. 2a, 2b und 3a-d jeweils einen Entlastungsmechanismus 20 aufweisen.

Die Verschlussmechanismen 10 umfassen außer dem Entlastungsmechanismus 20 jeweils einen Haken 11 mit einem Sicherungselement 12, eine Öse 13 und einen Schwenkarm 14 mit einem Gelenk 15, über den zwei benachbarte Verschlussmechanismen 10 gekoppelt sind.

Der Aufbau und die Anordnung der Verschlussmechanismen 10 und der zugehörigen Bestandteile entspricht bis auf den Entlastungsmechanismus 20, der im folgenden beschrieben wird, denjenigen in den Fig. 2a, 2b und 3a-d.

Jeder Entlastungsmechanismus 20 umfasst ein Entlastungselement 21 und einen Kraftarm 23.

Das Entlastungselement 21 ist Bestandteil des Hakens 11 und befindet sich an dem von der Öse 13 abgewandten Seite des Hakens 11. Das Entlastungselement 21 ist keilförmig, wobei die für die Funktion des Entlastungsmechanismus 20 wichtige schräge Fläche 22 zur Schubumkehrertür 3 (vgl. Fig. 2a) bzw. in Öffnungsrichtung 7 der Schubumkehrertür 3 zeigt.

Der Kraftarm 23 ist parallel zur Längsachse 2 des Strahltriebwerks (vgl. Fig. 2a) angeordnet und ist auf die schräge Fläche 22 des keilförmigen Entlastungselements 21 gerichtet. Der Kraftarm 23 weist an seinem der schrägen Fläche 22 des Entlastungselements 21 zugewandten Ende eine drehbar gelagerte Rolle 24 auf.

In den Fig. 4a-d sind außerdem die drei Schritte des Entlastens und Freigebens des Verschlussmechanismus 10 und des Öffnens der Schubumkehrertüren 3 gemäß der Erfindung dargestellt.

In den Fig. 4a und b ist der erste Schritt dargestellt, bei dem zwei benachbarte Verschlussmechanismen 10 entlastet werden. An jedem Verschlusselement 10 wird der Entlastungsmechanismus 20 betätigt, indem der Kraftarm 23 mit einer Kraft 25 auf die schräge Fläche 23 des keilförmigen Entlastungselements 21 zu bewegt wird.

Die Rolle 24 rollt dabei auf der schrägen Fläche 22ab, während sich gleichzeitig der Haken 11 in Schließrichtung 4 der Schubumkehrertür 3 bewegt (Fig. 4a).

Der Kraftarm 23 wird so lange gegen die schräge Fläche 22 gedrückt bis sich das Sicherungselement 12 des Hakens 11 im Bereich der Öffnung 13a der Öse 13 befindet (Fig. 4b).

In Fig. 4c ist der Schritt des Freigebens der benachbarten Verschlussmechanismen 10 dargestellt. Der Schwenkarm 14 wird so lange in Schwenkrichtung 16 gedreht, bis die Ösen 13 die Haken 11 freigeben.

Fig. 4d zeigt dem Schritt des Öffnens der Schubumkehrertüren 3. Die Kraftarme 23 werden von den Kräften 25 befreit und in der Löserichtung 26 zurückgezogen bis die Kraftarme 23 die schrägen Flächen 22 der Entlastungselemente 21 nicht mehr berühren. Anschließend werden die nicht dargestellten Aktuatoren betätigt, die die Schubumkehrertüren 3 in Öffnungsrichtung 7 öffnen bis der gewünschte Umkehrschub erzeugt wird. Der Umkehrschub ist erforderlich, um das Flugzeug abzubremsen.

Die Kraft 25 kann unabhängig oder zusammen mit den Aktuatoren auf den jeweiligen Versschlussmechanismus 10 wirken. Die Kraftarme 23 werden unabhängig von den Aktuatoren gesteuert. Die Kraft 25 kann mechanisch, elektromechanisch, pneumatisch oder hydraulisch erzeugt werden.

### Bezugszeichenliste

- 1: Schubumkehrer
- 2: Längsachse
- 3: Schubumkehrertür
- 4: Schließrichtung
- 5: Schubumkehrerstruktur
- 6: Abgasstrahl
- 7: Öffnungsrichtung

- 10: Verschlussmechanismus
- 11: Haken
- 12: Sicherungselement
- 13: Öse
- 13a: Öffnung
- 14: Schwenkarm
- 15: Gelenk
- 16: Schwenkrichtung

- 20: Entlastungsmechanismus
- 21: Entlastungselement
- 22: Schräge Fläche
- 23: Kraftarm
- 24: Rolle
- 25: Kraft
- 26: Löserichtung

## Patentansprüche

1. Vorrichtung zum Öffnen und Schließen einer Schubumkehrertür (3) eines Strahltriebwerks, wobei die Vorrichtung mindestens einen Aktuator und mindestens einen Verschlussmechanismus (10) aufweist, der mindestens ein an der Schubumkehrertür (3) angebrachtes erstes Verschlusselement (11) und mindestens ein an der Triebwerksstruktur (5) angebrachtes zweites Verschlusselement (13) umfasst, und wobei
- das Strahltriebwerk eine Längsachse (2) aufweist,
- die Vorrichtung zusätzlich zu dem Aktuator mindestens einen Entlastungsmechanismus (20) umfasst, der mit dem Verschlussmechanismus (10) gekoppelt ist, und
- der Entlastungsmechanismus (20) mindestens ein Entlastungselement (21), das an dem ersten Verschlusselement (11) angebracht ist, und mindestens einen zu dem Entlastungselement (21) gehörigen Kraftarm (23) umfasst,
**dadurch gekennzeichnet, dass**
der Kraftarm (23) im Wesentlichen parallel zu der Längsachse (2) des Strahltriebwerks angeordnet ist.

2. Vorrichtung nach Anspruch 1, **dadurch gekennzeichnet, dass** das Entlastungselement (21) mindestens eine schräge und/oder gekrümmte Fläche (22) aufweist, die zur Schubumkehrertür (3) zeigt, und der Kraftarm (23) mindestens eine Rolle (24) aufweist, die auf der schrägen und/oder gekrümmten Fläche (22) des Entlastungselements (21) abrollbar ist.

3. Vorrichtung nach Anspruch 1 oder 2, **dadurch gekennzeichnet, dass** das zweite Verschlusselement (13) an einem Schwenkarm (14) befestigt ist.

4. Vorrichtung nach einem der Ansprüche 1 bis 3, **dadurch gekennzeichnet, dass** die zweiten Verschlusselemente (13) von zwei benachbarten Schubumkehrertüren (3) an einem gemeinsamen Schwenkarm (14) befestigt sind.

5. Vorrichtung nach einem der Ansprüche 1 bis 4, **dadurch gekennzeichnet, dass** das erste Verschlusselement (11) im Wesentlichen L-förmig ist und an dem in das zweite Verschlusselement (13) eingreifenden Teil ein Sicherungselement (12) für das zweite Verschlusselement (13) aufweist.

6. Vorrichtung nach einem der Ansprüche 1 bis 5, **dadurch gekennzeichnet, dass** das erste Verschlusselement (11) ein Haken und das zweite Verschlusselement (13) eine Öse ist oder umgekehrt.

7. Verfahren zum Öffnen und Schließen einer Schubumkehrertür (3) eines Strahltriebwerks mittels einer Vorrichtung nach einem der Ansprüche 1 bis 6, wobei die Schubumkehrertür (3) zu Beginn des Öffnungsvorgangs in Schließrichtung (4) gezogen wird und dabei der zugehörige Verschlussmechanismus (10) entlastet und freigegeben wird, und wobei
- mindestens eine Kraft (25) an dem Verschlussmechanismus (10) eingeleitet wird, die allein oder zusammen mit dem Aktuator den Verschlussmechanismus (10) entlastet,
- der Verschlussmechanismus (10) nach dem Entlasten und Freigeben von der Kraft (25) befreit wird, und
- die Kraft (25) am Entlastungselement (21) des ersten Verschlusselements (11) eingeleitet wird,
**dadurch gekennzeichnet, dass**
die Kraft (25) im Wesentlichen parallel zur Längsachse (2) des Strahltriebwerks wirkt und das erste Verschlusselement (11) in Schließrichtung (4) der Schubumkehrertür (3) bewegt.

8. Verfahren nach Anspruch 7, **dadurch gekennzeichnet, dass** die Kraft (25) mittels des Kraftarms (23) erzeugt wird, der mittels der Rolle (24) an der schrägen und/oder gekrümmten Fläche (22) des Entlastungselements (21) abrollt.

## Claims

1. Device for opening and closing a thrust reverser door (3) of a jet engine, with the device having at least one actuator and at least one locking mechanism (10) including at least one first locking element (11) mounted on the thrust reverser door (3) and at least one second locking element (13) mounted on the engine structure (5), and with
- the jet engine having a longitudinal axis (2),
- the device including besides the actuator at least one unloading mechanism (20) which is coupled to the locking mechanism (10), and
- the unloading mechanism (20) including at least one unloading element (21) mounted on the first locking element (11) and at least one force arm (23) associated with the unloading element (21),
**characterized in that**
the force arm (23) is arranged essentially parallel to the longitudinal axis (2) of the jet engine.

2. Device in accordance with Claim 1, **characterized in that** the unloading element (21) has at least one inclined and/ or curved surface (22) facing the thrust reverser door (3) and that the force arm (23) has at least one roller (24) being rollable on the inclined and/ or curved surface (22) of the unloading element (21).

3. Device in accordance with Claim 1 or 2, **characterized in that** the second locking element (13) is attached to a swivel arm (14).

4. Device in accordance with one of the Claims 1 to 3, **characterized in that** the second locking elements (13) of two adjacent thrust reverser doors (3) are attached to a common swivel arm (14).

5. Device in accordance with one of the Claims 1 to 4, **characterized in that** the first locking element (11) is essentially L-shaped and, on the portion engaging the second locking element (13), has a securing element (12) for the second locking element (13).

6. Device in accordance with one of the Claims 1 to 5, **characterized in that** the first locking element (11) is a hook and the second locking element (13) is an eye, or vice versa.

7. Method for opening and closing a thrust reverser door (3) of a jet engine by means of a device in accordance with one of the Claims 1 to 6, with the thrust reverser door (3) being pulled in closing direction (4) at the beginning of the opening process and at the same time the associated locking mechanism (10) being unloaded and released, and with
- at least one force (25) being introduced at the locking mechanism (10) which, solely or jointly with the actuator, unloads the locking mechanism (10).
- the locking mechanism (10) being relieved from the force (25) upon unloading and releasing, and
- the force (25) being introduced at the unloading element (21) of the first locking element (11),
**characterized in that**
the force (25) acts essentially parallel to the longitudinal axis (2) of the jet engine and moves the first locking element (11) in the closing direction (4) of the thrust reverser door (3).

8. Method in accordance with Claim 7, **characterized in that** the force (25) is produced by the force arm (23) which, via the roller (24), rolls along the inclined and/ or curved surface (22) of the unloading element (21).

## Revendications

1. Dispositif destiné à ouvrir et fermer une porte d'inverseur de poussée (3) d'un moteur à réaction, sachant que le dispositif présente au moins un actionneur et au moins un mécanisme de fermeture (10) comprenant au moins un premier élément de fermeture (11) disposé sur la porte d'inverseur de poussée (3) et au moins un deuxième élément de fermeture (13) disposé sur la structure du moteur (5), et que
- le moteur à réaction présente un axe longitudinal (2),
- outre l'actionneur, le dispositif comprend au moins un mécanisme de délestage (20) couplé au mécanisme de fermeture (10), et que
- le mécanisme de délestage (20) comprend au moins un élément de délestage (21) disposé sur le premier élément de fermeture (11), et au moins un bras de force (23) appartenant à l'élément de délestage (21),
**caractérisé en ce que**
le bras de force (23) est pour l'essentiel disposé parallèlement à l'axe longitudinal (2) du moteur à réaction.

2. Dispositif selon la revendication n° 1, **caractérisé en ce que** l'élément de délestage (21) présente au moins une surface (22) inclinée et/ ou incurvée orientée sur la porte d'inverseur de poussée (3), et le bras de force (23) présente au moins un galet (24) qui peut rouler sur la surface (22) inclinée et/ ou incurvée de l'élément de délestage (21).

3. Dispositif selon la revendication n° 1 ou n° 2, **caractérisé en ce que** le deuxième élément de fermeture (13) est fixé à un bras pivotant (14).

4. Dispositif selon une des revendications n° 1 à n° 3, **caractérisé en ce que** les deuxièmes éléments de fermeture (13) de deux portes d'inverseur de poussée (3) voisines sont fixés à un bras pivotant (14) commun.

5. Dispositif selon une des revendications n° 1 à n° 4, **caractérisé en ce que** le premier élément de fermeture (11) est pour l'essentiel en forme de L et présente, sur la partie s'engageant dans le deuxième élément de fermeture (13), un élément de blocage (12) pour le deuxième élément de fermeture (13).

6. Dispositif selon une des revendications n° 1 à n° 5, **caractérisé en ce que** le premier élément de fermeture (11) est un crochet et le deuxième élément de fermeture (13) est un oeillet, ou inversement.

7. Procédé destiné à ouvrir et fermer une porte d'inverseur de poussée (3) d'un moteur à réaction moyennant un dispositif selon une des revendications n° 1 à n° 6, sachant que la porte d'inverseur de poussée (3) est tirée dans le sens de fermeture (4) au début de l'opération d'ouverture et, ce faisant, le mécanisme de fermeture (10) associé est délesté et débloqué, et que
- sur le mécanisme de fermeture (10) est introduite au moins une force (25) qui, seule ou avec l'actionneur, déleste le mécanisme de fermeture (10),
- le mécanisme de fermeture (10) est libérée de la force (25) après le délestage et le déblocage, et
- la force (25) est introduite sur l'élément de délestage (21) du premier élément de fermeture (11),
**caractérisé en ce que**
la force (25) s'exerce pour l'essentiel parallèlement à l'axe longitudinal (2) du moteur à réaction et met en mouvement le premier élément de fermeture (11) dans le sens de fermeture (4) de la porte d'inverseur de poussée (3).

8. Procédé selon la revendication n° 7, **caractérisé en ce que** la force (25) est générée au moyen du bras de force (23) qui roule au moyen du galet (24) sur la surface (22) inclinée et/ ou incurvée de l'élément de délestage (21).
